# EUROPÄISCHE PATENTSCHRIFT

(11) **EP 3 507 568 B1**
(45) Veröffentlichungstag und Bekanntmachung des Hinweises auf die Patenterteilung: **26.05.2021**
(21) Anmeldenummer: 17757475.3
(22) Anmeldetag: 04.08.2017
(51) Int. Cl.: G01B 5/012

(54) **SYSTEM UND VERFAHREN ZUM TAKTILEN MESSEN EINES MESSOBJEKTS UND VERWENDUNG DIESES SYSTEMS**
SYSTEM AND METHOD FOR TACTILE MEASUREMENT OF A MEASUREMENT OBJECT AND USE OF SAID SYSTEM
SYSTÈME ET MÉTHOD DE MESURE TACTILE D'UN OBJET DE MESURE ET UTILISATION DE CE SYSTÈME

(30) Priorität: 30.08.2016 DE 102016216254
(43) Veröffentlichungstag der Anmeldung: 10.07.2019
(73) Patentinhaber: Bayerische Motoren Werke Aktiengesellschaft, 80809 München (DE)
(72) Erfinder: WAGNER, Herbert, 94481 Grafenau (DE); SPEISEDER, Markus, 94333 Geiselhoering (DE); MILLER, Andreas, 47249 Duisburg (DE); WILHELM, Michael, 84048 Mainburg (DE)
(86) Internationale Anmeldenummer: PCT/EP2017/069760
(87) Internationale Veröffentlichungsnummer: WO 2018/041522

(56) Entgegenhaltungen:
- EP-A1- 2 679 352
- DE-B3-102013 220 148
- GB-A- 2 238 616
- US-A- 5 659 969
- US-A1- 2004 128 847

## Beschreibung

Die vorliegende Erfindung betrifft ein Messsystem, ein Fertigungssystem, ein Verfahren zum taktilen Messen sowie eine Verwendung einer Ausgleichseinheit.

Aktuell werden Bauteile z. B. taktil auf Portalmaschinen oder optisch (Kamera-/Lasertriangulation) mit stationären Anlagen oder speziellen Messrobotern gemessen. Die bekannten Systeme bedingen einen hohen Programmier- und Betreuungsaufwand durch entsprechend geschulte Spezialisten. Insbesondere Portalmaschinen sind zudem sehr teuer. Der eigentliche Messvorgang nimmt bei derartigen Anlagen außerdem viel Zeit in Anspruch. Zwar sind auch Messroboter bekannt, welche ggf. billiger und vor allem kleiner sind als große Portalmessmaschinen. Letztlich handelt es sich aber auch hier um sehr spezielle Systeme, welche hinsichtlich Funktionalität und Handhabbarkeit sehr eingeschränkt sind. Die bereits angesprochenen optischen Messmethoden, welche beispielsweise Kameras verwenden, mögen hierbei zwar Vorteile bieten, weisen aber gerade bei schwankenden oder glänzenden Oberflächen systembedingt Nachteile auf.

Die US 2004/0128847 A1 betrifft eine Messeinrichtung für eine Koordinatenmessmaschine.

Die US 5,659,969 betrifft eine Sonde für ein Positionsbestimmungsgerät, das in der Sonde einen Sensorraum, einen Stift, der für eine Positionsbestimmungsbewegung gelagert ist und sich in den Raum erstreckt, eine Einrichtung, um in den Raum Sensorstrahlung zu imitieren, und eine Einrichtung zum Sammeln der Sensorstrahlung von dem Raum hat. Die Sammeleinrichtung umfasst eine Faseroptik, die eine Anordnung von optischen Faserelementen hat und für eine Änderung einer Intensitätsverteilung der gesamten abgelenkten Strahlung mit der dreidimensionalen Bewegung des Stiftes empfindlich ist, wobei der Stift frei von einer mechanischen Verbindung für die Positionsbestimmung ist.

Die GB 22 38 616 A betrifft einen Messtaster mit einer Verschiebungserfassungseinrichtung zum Erfassen einer Lageänderung des Messtasters.

Die EP 2 679 352 A1 betrifft eine Vorrichtung zum automatisierten Entnehmen von in einem Behälter angeordneten Werkstücken, mit einer ersten Objekterkennungseinrichtung zum Erfassen der Werkstücke und einem ersten Greifer zum Greifen und Entnehmen der Werkstücke aus dem Behälter, und einer Steuerung zur Auswertung der Daten der ersten Objekterkennungseinrichtung, zur Bahnplanung und zur Steuerung des ersten Greifers.

Die DE 10 2013 220 143 B3 betrifft eine Ausgleichseinheit, insbesondere zur Anordnung zwischen einem Roboterflansch und einem Aktuator. Der Roboterflansch kann dabei das freie Ende eines Roboterarms oder einer anderen Handhabungseinheit sein. Der Aktuator kann insbesondere als ein am Roboterflansch bzw. als an der Ausgleichseinheit angeordneter Greifer ausgebildet sein.

Es ist daher eine Aufgabe der vorliegenden Erfindung, ein Messsystem, ein Fertigungssystem, ein Verfahren zum taktilen Messen sowie eine Verwendung einer Ausgleichseinheit anzugeben, welche die vorgenannten Nachteile beseitigen und insbesondere kostengünstig und flexibel einsetzbar sind.

Diese Aufgabe wird durch ein Messsystem gemäß Anspruch 1, ein Fertigungssystem gemäß Anspruch 6, durch ein Verfahren gemäß Anspruch 8 sowie durch eine Verwendung gemäß Anspruch 10 gelöst. Weitere Vorteile und Merkmale ergeben sich aus den Unteransprüchen sowie der Beschreibung und den beigefügten Figuren.

Erfindungsgemäß umfasst ein Messsystem, insbesondere ein taktiles Messsystem, eine Ausgleichseinheit, beispielsweise für einen Roboter, wobei die Ausgleichseinheit ein oder zumindest ein Messelement umfasst, und wobei durch ein Auslesen oder Auswerten einer Auslenkung der Ausgleichseinheit eine Messfunktion bzw. eine Messfunktionalität bereitgestellt werden kann. Das Messelement ist zweckmäßigerweise an der Ausgleichseinheit angeordnet oder anordenbar bzw. mit dieser verbunden oder verbindbar, indem es beispielsweise form- und/oder kraftschlüssig angeordnet, beispielsweise eingeschraubt oder eingesteckt, wird. Die Anordnung erfolgt dabei insbesondere fest bzw. starr und spielfrei bzw. derart, dass die Messfunktion bereitgestellt werden kann. Vorteilhafterweise handelt es sich bei der Ausgleichseinheit um eine Standardausgleichseinheit für (Industrie-) Roboter. Derartige Ausgleichseinheiten sind z. B. zwischen einem Roboterarm und einem daran angeordneten Greifer vorgesehen, um die beim Einleben von Werkstücken in eine Spannstelle fehlende Nachgiebigkeit des Roboterarms auszugleichen, wobei hierfür in der Ausgleichseinheit entsprechende elastische Glieder vorgesehen sind. Dies verhindert eine Überbeanspruchung des Roboters bzw. eine Beschädigung der Werkstücke. Üblicherweise umfasst die Ausgleichseinheit z. B. zwei Teile, ein Oberteil und ein Unterteil, welche beweglich zueinander gelagert sind. Mit Vorteil wird nun vorliegend der an sich bekannte Ausgleichsmechanismus der Ausgleichseinheit dazu genutzt, die Messfunktion bereitzustellen. Insofern stellt ein gewisser Versatz oder eine Auslenkung, die durch die Ausgleichseinheit kompensiert wird, einen bestimmten Messwert dar, welcher ausgelesen und ausgewertet werden kann. Hierzu ist die Ausgleichseinheit mit einem entsprechenden Rechensystem bzw. einer Auswerteeinheit versehen bzw. kombiniert, welche ausgelegt ist, die vorgenannte Funktionalität bereitzustellen, insbesondere die erfasste Auslenkung bzw. den Versatz in einen Messwert zu übertragen, wobei dieser Messwert kein exakter Zahlenwert sein muss sondern auch lediglich darin bestehen kann, anzugeben, ob ein Bauteil, Werkstück etc. maßlich im Toleranzbereich liegt oder auch nicht.

Gemäß einer Ausführungsform weist ein Ausgleichsmechanismus der Ausgleichseinheit Pneumatikelemente auf. Diese ermöglichen unter anderem, dass die Ausgleichseinheit weich oder starr geschaltet werden kann. Insofern ist es zweckmäßigerweise auch vorgesehen, dass der Ausgleichsmechanismus arretierbar ist, wodurch insbesondere ermöglicht wird, bestimmte Positionen des an der Ausgleichseinheit, insbesondere starr und drehfest, befestigen Messelements zu "speichern". Bevorzugt sind auch rein mechanische Ausgleichseinheiten welche darüber hinaus bevorzugt auch einstellbar sind, insbesondere was deren Widerstand bzw. Nachgiebigkeit betrifft. Dies kann z. B. über die Vorspannung entsprechender Federn erfolgen, worüber die Nachgiebigkeit der Ausgleichseinheit definiert bzw. justiert werden kann. Bevorzugte Ausführungsformen von Ausgleichseinheiten arbeiten mit Gleitführungen, insbesondere aber auch mit Rollenführungen, welche sehr leichtgängig sind.

Bevorzugt ist die Ausgleichseinheit ausgelegt, einen translatorischen und/oder einen rotatorischen Ausgleich bzw. eine translatorische und/oder eine rotatorische Auslenkung bereitzustellen. Gemäß einer Ausführungsform ist die Ausgleichseinheit ausgelegt, einen x-Ausgleich und/oder einen y-Ausgleich und/oder einen z-Ausgleich bereitzustellen, wobei x, y und z die Achsen eines kartesischen Koordinatensystems bezeichnen. Ermöglicht ist also mit Vorteil ein Ausgleich bzw. die Erfassung von Auslenkungen in allen drei Raumrichtungen, sowohl einzeln als auch in Kombination. Besonders bevorzugt kann die Ausgleichseinheit Versatze/Auslenkungen in x-, y- und z-Richtung ausgleichen. Bevorzugt sind alternativ oder zusätzlich auch die (jeweiligen) rotatorischen Freiheitsgrade mit umfasst, sodass auch etwaige Drehbewegungen/Rotationen kompensiert und damit gemessen werden können. Die Messfunktionalität kann dabei wie folgt dargestellt/realisiert werden: Das Messelement, beispielsweise ein kugelförmiger Messtaster, wird entlang der z-Richtung in Richtung einer Referenz-Bauteiloberfläche geführt, bis er in Kontakt ist bzw. bereits etwas "eingefedert/ausgelenkt" ist. Diese Position bzw. die durch die Ausgleichseinheit erfasste Auslenkung wird gespeichert. In einem nächsten Schritt kommt das eigentlich zu vermessende Bauteil an diese Messstelle und das Messelement wird an die vorher eingestellte Referenzposition geführt. Weicht das zu vermessende Objekt nun z. B. in seiner Höhe von dem Referenzmessobjekt ab, dann wird dieser Unterscheid automatisch über die Ausgleichseinheit kompensiert und erfasst. Dieses "Delta" bzw. der daraus resultierende Versatz, in diesem Beispiel in z-Richtung, kann vorteilhafterweise ausgewertet/ausgelesen und in einen Messwert umgerechnet werden, sodass beispielsweise gemessen werden kann, dass die in Rede stehende Bauteiloberfläche zu hoch oder zu niedrig ist.

In ähnlicher Weise kann beispielsweise die Positionierung einer Bohrung in der xy-Ebene vermessen werden etc. Zweckmäßigerweise ist das Messelement hierzu als Kegel ausgebildet bzw. weist einen Messtaster in Form eines Kegels auf. Der Messkegel wird zum Kalibrieren bzw. "Nullen" des Messsystems in einer Referenzbohrung positioniert, wobei sowohl die Position des Messelements als auch etwaige Versatze der Ausgleichseinheit gespeichert werden. In einem nächsten Schritt wird das eigentlich zu vermessende Objekt an die Stelle des Referenzobjekts positioniert und das Messelement in die vorher gespeicherte Position verfahren. Ist beispielsweise die Bohrung des Messobjekts anders positioniert, kann dies durch die Ausgleichseinheit und durch den Vergleich mit den vorher erfassten und gespeicherten Daten erkannt und in entsprechende Messwerte umgewandelt werden. Die Kegelform bringt, insbesondere beim Vermessen von runden Objekten wie Bohrungen, den Vorteil mit sich, dass sich das Messelement quasi automatisch ausrichtet. Grundsätzlich lassen sich mit dem Messsystem vorteilhafterweise Toleranzen in allen drei Raumrichtungen erfassen und überprüfen. Gleiches gilt entsprechend für die rotatorischen Freiheitsgrade, wobei hierbei dasselbe Messprinzip zur Anwendung kommen kann. Gemäß einer Ausführungsform ist das Messelement auch rund, insbesondere kreisrund ausgebildet bzw. weist einen Messtaster auf, welcher rund, insbesondere kreisrund, ausgebildet ist. Zweckmäßigerweise sind die Messelemente austauschbar mit der Ausgleichseinheit verbunden, sodass eine schnelle Anpassung an verschiedene Messaufgaben möglich ist.

Die beiden obigen Beispiele zeigen lediglich zwei Möglichkeiten, wie die Messfunktion realisiert werden kann. So ist es nicht z. B. nicht nötig, Referenzobjekte zum Nullen bzw. Kalibrieren des Messsystems vorzusehen. Bei Verwendung einer entsprechenden Sensorik, kann die Position des Messelements, insbesondere des Messtasters, exakt erfasst werden, genauso wie die Position eines zu vermessenden Bauteils. Ist die Position eines zu vermessende Bauteils exakt erfasst, wobei als Orientierung beispielsweise eine Referenzfläche dienen kann, so kann über das Messelement und die durch die Ausgleichseinheit erkannte(n) Auslenkung(en) eine in dem Bauteil vorhanden Bohrung exakt vermessen werden. Gemäß einer Ausführungsform umfasst das Messsystem auch optische Erfassungsmittel wie Kameras und weist bevorzugt Möglichkeiten zur (Laser-)Triangulation auf.

Zweckmäßigerweise umfasst das Messsystem die Auswerteeinheit, welche ausgelegt ist, die Auslenkung der Ausgleichseinheit zu verarbeiten. Die Auswerteeinheit kann als elektrische Komponente im oder im Bereich der Ausgleichseinheit angeordnet sein. Alternativ und/oder zusätzlich kann die Auswerteeinheit aber auch remote angeordnet sein, beispielsweise in der Steuereinheit eines Roboters etc. Entsprechende, durch die Ausgleichseinheit erfasste, Werte können auch kabellos, z. B. per Funk etc., übertragen werden. Zweckmäßigerweise wird durch das Zusammenspiel der Auswerteeinheit und des Ausgleichselements ein äußerst flexibles System geschaffen, welches leicht zu handhaben und insbesondere auch portabel und an den unterschiedlichsten Typen von Robotern einsetzbar ist. Hinsichtlich der möglichen Messaufgaben bzw. Messfunktionen sind keine Grenzen gesetzt. Je nachdem wie die Ausgleichseinheit z. B. kalibriert ist, lassen sich sämtliche Werte und Daten eines zu vermessenden Objekts erfassen. Besonders bevorzugt ist in diesem Zusammenhang das Messelement austauschbar gestaltet, wodurch, abhängig von der Messaufgabe, die verschiedensten Messtaster mit den jeweils benötigten Geometrien anordenbar sind.

Zweckmäßigerweise ist die Ausgleichseinheit mit einer Sensorik versehen, welche ein oder mehrere Sensoren umfasst, um die Auslenkungen zu erfassen, zu speichern und weiterzugeben.

Gemäß einer Ausführungsform umfasst das Messsystem ein Schnellwechselsystem zur schnellen Anordnung des Messsystems an einem Industrieroboter bzw. allgemein an einem Verfahrsystem. Das Verfahrsystem ist dahingehend ausgelegt, das Messelement zu verfahren bzw. in eine Messposition zu bringen. Wie bereits erwähnt, kommt als Verfahrsystem mit Vorteil ein (Industrie-)Roboter zum Einsatz, beispielsweise ein Sechsachs-Roboter. Alternativ kann es sich bei dem Verfahrsystem um einen (Arbeits-)Zylinder wie einen Pneumatik- und/oder Hydraulikzylinder handeln, welcher z. B. einen Verfahrweg entlang einer Richtung realisieren kann. Ebenfalls möglich ist z. B. die Verwendung einer Spindellineareinheit. Geeignet sind alle Arten von Verfahrsystemen, welche eine Bewegung, beispielsweise eine Linearbewegung, ermöglichen. Ein derartiges Schnellwechselsystem ermöglicht insbesondere die schnelle Anordnung des Messsystems an einen Industrieroboter, welcher beispielsweise eigentlich für eine andere Aufgabe/Tätigkeit verwendet wird. So ist es mit Vorteil möglich, einen Industrieroboter, welcher an einer Fertigungslinie arbeitet, zwischenzeitlich mit dem Messsystem auszurüsten, um kurzzeitig eine bestimmte Messfunktion zu erfüllen. Sind die gesuchten Werte erfasst, kann der entsprechende Roboter schnell wieder umgebaut werden, beispielsweise auf ein Greifersystem.

Gemäß einer Ausführungsform umfasst das Messsystem auch eine externe Positioniereinheit zum Positionieren eines zu vermessenden Bauteils. Gemäß einer Ausführungsform kann beispielsweise das vorgenannte Kalibrieren über die externe Positioniereinheit dargestellt werden, welche ein zu vermessendes Bauteil in eine Messposition bringen kann. Gemäß einer Ausführungsform handelt es sich bei der externen Positioniereinheit beispielsweise um einen verfahrbaren Tisch, welcher insbesondere in x- und/oder y- und/oder in z-Richtung verfahrbar ist. Das zu vermessende Objekt ist dann auf diesem Tisch positioniert.

Die Erfindung richtet sich auch auf ein Fertigungssystem, umfassend ein Verfahrsystem, insbesondere einen Industrieroboter, wobei das Verfahrsystem eine Auswerteeinheit aufweist, wobei die Auswerteeinheit ein oder zumindest ein Messelement umfasst, und wobei durch ein Auswerten und/oder Auslesen einer Auslenkung der Ausgleichseinheit eine Messfunktion bzw. eine Messfunktionalität bereitgestellt werden kann. In einer bevorzugten Ausführungsform ist ein Industrieroboter vorgesehen, welcher einen Greifarm aufweist, wobei der Greifarm als Endeffektor das Messelement umfasst. Die Ausgleichseinheit ist, ggf. auch auswechselbar, an dem Roboterarm/Greifarm des Roboters befestigt. Alternativ kann es sich bei dem Verfahrsystem auch um einen, beispielsweise hydraulischen und/oder pneumatischen, Zylinder handeln, welcher entlang einer Richtung verfahrbar ist. Zweckmäßigerweise umfasst das Fertigungssystem ein erfindungsgemäßes Messsystem.

Gemäß einer Ausführungsform umfasst das Fertigungssystem eine Verarbeitungseinheit, welche ausgelegt ist, die von der Ausgleichseinheit erfassten Daten zur Steuerung und/oder Regelung anderer, beispielswiese vorgelagerter und/oder nachgelagerter, Prozessschritte zu verwenden. Mit Vorteil können also die ermittelten Daten des Messsystems zu Steuerung und/oder Regelung von weiteren Prozessen verwendet werden. Dies ermöglicht die Vornahme von Inline-Korrekturen und/oder -Anpassungen, welche zweckmäßigerweise sofort auf ihre Wirksamkeit hin überprüft werden können. Mit Vorteil ist es beispielsweise möglich, einen vorgelagerten Verfahrensschritt zu korrigieren, wenn z. B. erkannt wurde, dass gewisse maßliche Abweichungen nicht eingehalten wurden. Alternativ oder zusätzlich ist es mit Vorteil auch möglich, auf die erkannte maßliche Abweichung durch eine Anpassung nachgelagerter Prozessschritte zu reagieren.

Für das erfindungsgemäße Fertigungssystem gelten die im Zusammenhang mit dem erfindungsgemäßen Messsystem erwähnten Vorteile und Merkmale analog und entsprechend sowie umgekehrt.

Weiter richtet sich die Erfindung auf ein Verfahren zum taktilen Messen, umfassend die Schritte:
- Bereitstellen eines Verfahrsystems, insbesondere Bereitstellen eines Industrieroboters, und einer Ausgleichseinheit, wobei das Verfahrsystem als Endeffektor ein Messelement aufweist, welches mit der Ausgleichseinheit verbunden ist;
- Abtasten eines Messobjekts mit dem Messelement und Auswerten einer Auslenkung der Ausgleichseinheit zum Vermessen des Objekts.

Das Abtasten kann grundsätzlich über ein Bewegen eines Roboterarms, ein Bewegen/Verfahren eines Zylinders und/oder über ein Bewegen des zu vermessenden Objekts erfolgen, welches hierzu beispielsweise auf einem beweglichen Tisch bzw. einer Positioniereinheit angeordnet/befestigt ist. Bevorzugt wird vorliegend ein Roboter mit einem Greifarm verwendet, welcher sechs oder mehr Freiheitsgrade aufweist.

Zweckmäßigerweise umfasst das Verfahren weiter den Schritt:
- Kalibrieren des Messelements bzw. der Ausgleichseinheit an einem Referenzobjekt, insbesondere zum Bestimmen einer Referenzposition bzw. zum Bestimmen oder Festlegen eines Koordinatensystems.

Alternativ oder zusätzlich kann das Koordinatensystem auch über eine Sensorik, beispielswiese umfassend eine oder mehrere Kameras, festgelegt werden.

Gemäß einer Ausführungsform umfasst das Verfahren den Schritt:
- Kalibrieren des Messelements über eine externe Positioniereinheit.

Mit dem Kalibrieren ist insbesondere ein Nullen des Messelements bzw. der Ausgleichseinheit bzw. des Messsystems gemeint. Bei der externen Positioniereinheit handelt es sich beispielsweise um einen verfahrbaren Tisch bzw. um eine Verschiebeeinheit, welche zum Beispiel rotatorische aber auch translatorische Freiheitsgrade bereitstellt.

Gemäß einer Ausführungsform umfasst das Verfahren die Schritte:
- Abtasten derart, dass das Messelement oder das zu vermessende Objekt in eine Messposition verfahren wird;
- Erfassen und Auswerten des Verfahrwegs und Auswerten der Auslenkung des Messelements, insbesondere der x- und y-Auslenkung.

Diese Ausgestaltung ist äußerst effektiv und kostengünstig. Mit Vorteil kann (lediglich) eine x/y-Ausgleichseinheit verwendet werden. Als Verfahrsystem wird mit Vorteil ein Pneumatik- und/oder Hydraulikzylinder, bevorzugt mit Wegbegrenzung, verwendet, welcher ausgelegt und positioniert ist, das Messelement in z-Richtung, beispielsweise in eine Bohrung hinein, zu Verfahren. Dieser Verfahrweg kann ausgewertet werden, um beispielsweise einen z-Wert des zu vermessenden Objekts zu erhalten. Über die Auslenkung der Ausgleichseinheit bzw. des zur Verfügung gestellten x/y-Ausgleichs können schnell und zuverlässig maßliche Abweichungen in der x/y-Ebene erfasst werden.

Weiter richtet sich die Erfindung auf die Verwendung einer Ausgleichseinheit eines Industrieroboters zum Messen bzw. zum Vermessen von Bauteilen, Werkstücken etc.

Für das erfindungsgemäße Verfahren sowie für die erfindungsgemäße Verwendung gelten die im Zusammenhang mit dem Messsystem und dem Fertigungssystem erwähnten Vorteile analog und entsprechend sowie umgekehrt.

Weitere Vorteile und Merkmale ergeben sich aus der nachfolgenden Beschreibung einer Ausführungsform eines Messsystems bzw. eines Fertigungssystems/Industrieroboters mit Bezug auf die beigefügten Figuren.

Es zeigen:
- Figur 1:: eine schematische Ansicht eines Fertigungssystems bzw. Industrieroboters, umfassend ein Messsystem, basierend auf einer Ausgleichseinheit.
- Figur 2:: eine Detailansicht der Ausgleichseinheit aus Figur 1.

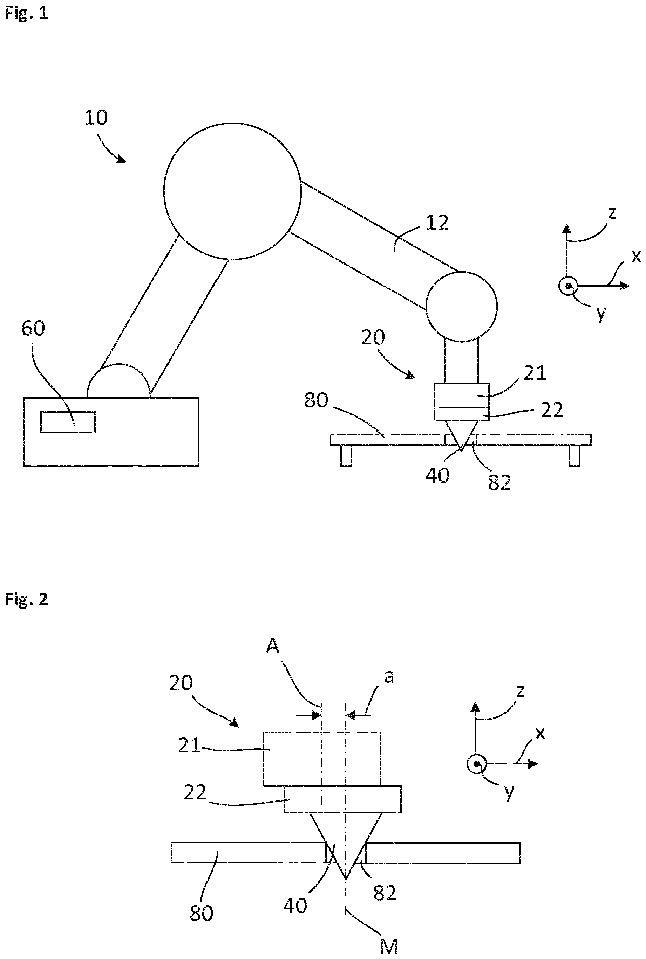

**Fig. 1** zeigt einen Industrieroboter 10, welcher einen Roboterarm 12 aufweist, der als Endeffektor ein Messelement bzw. einen Messtaster 40 umfasst. Das Messelement 40 ist an einer Ausgleichseinheit 20 des Roboters 10 bzw. des Roboterarms 12 angeordnet bzw. befestigt. Der Roboterarm 12 ist durch hier lediglich skizzenhaft dargestellte Gelenke in allen Raumrichtungen, skizziert durch die Koordinaten x, y und z, sowie auch um die entsprechenden Rotationsachsen frei beweglich. Das Messelement 40 ist in der hier gezeigten Ausführungsform als Kegel ausgebildet. Mit dem Bezugszeichen 80 ist ein Bauteil, in der hier gezeigten Ausführungsform in der Form einer Platte, dargestellt, welches ein Messobjekt 82 in der Form einer Bohrung aufweist. Die Ausgleichseinheit 20 ist funktional mit einer Auswerteeinheit 60 verbunden, welche in einem Fuß des Roboters 10 skizzenhaft angedeutet ist. Das Messelement 40 ist in der hier gezeigten Darstellung noch außerhalb des Messobjekts 82 angeordnet. Ein Oberteil 21 und ein Unterteil 22 der Ausgleichseinheit 20 weisen zueinander keinen Versatz auf. In einem hier nicht dargestellten Verfahrensschritt wurde der Roboterarm 12 entlang der z-Achse in eine Referenzbohrung eines Referenzbauteils geführt, wobei die Ausrichtung des Referenzbauteils bzw. die Positionierung des Roboterarms derart erfolgte, dass über die Ausgleichseinheit 20 keinerlei Auslenkung gemessen wurde. In der Figur 2 ist eine Situation/Position dargestellt, bei welcher das Messelement 40 in seiner Messposition in dem Messobjekt 82 angeordnet ist, wobei hierbei über die Ausgleichseinheit 20 ein Versatz/eine Auslenkung in der xy-Ebene gemessen werden kann.

**Fig. 2** zeigt in einer größeren Ansicht die aus Figur 1 bekannte Ausgleichseinheit 20. Das im Wesentlichen kegelförmige Messelement 40 ist in die Bohrung 82 geführt. Dadurch, dass die Bohrung 82 nicht an der gleichen Position ist wie die Bohrung des Referenzobjekts, hat sich in der Ausgleichseinheit 20 ein gewisser Versatz bzw. eine Auslenkung eingestellt, welche mit dem Bezugszeichen a verdeutlicht ist. Das Oberteil 21 und das Unterteil 22 der Ausgleichseinheit 20 sind zueinander versetzt. Die Auslenkung a bemisst also den Abstand zwischen einer Mittelachse A der Ausgleichseinheit 20 bzw. des Oberteils 21 und einer Mittelachse M der Bohrung 82 bzw. des Unterteils 22. Beim Kalibrieren/Nullen der Ausgleichseinheit 20 war die Mittelachse A (z. B.) deckungsgleich mit der Mittelachse M. Die Auslenkung a kann nun über die Auswerteeinheit in das xyz-Koordinatensystem umgerechnet werden, sodass maßliche Abweichungen der Position der Bohrung, z. B. in der xy-Ebene, erfassbar sind. Über eine Auswertung in z-Richtung wäre es z. B. auch möglich, etwaige Abweichungen des Durchmessers der Bohrung bzw. einer Höhe des Bauteils 80 zu erfassen.

Zurückkommend auf die Figur 1 wird klar, dass das Messsystem, umfassend die Ausgleichseinheit 20 und das Messelement 40, äußerst leicht demontiert und an einem anderen Roboter angebracht werden kann. Der in Figur 1 skizzierte Roboter 10 kann dann beispielsweise wieder als Greifroboter verwendet werden. Alternativ zu dem Roboter kann beispielsweise ein Hydraulik- oder Pneumatikzylinder verwendet werden, welcher derart positioniert ist, dass er entlang der z-Richtung verfahrbar ist. Die Verfahrwege des Zylinders können direkt erfasst und ausgewertet werden.

### Bezugszeichenliste

- 10: (Industrie-)Roboter
- 12: Roboterarm
- 20: Ausgleichseinheit
- 21: Oberteil
- 22: Unterteil
- 40: Messelement, Messtaster
- 60: Auswerteeinheit
- 80: Bauteil, Platte
- 82: Messobjekt, Bohrung
- a: Auslenkung
- M: Mittelachse der Bohrung
- A: Mittelachse der Ausgleichseinheit
- x, y, z: Achsen

## Patentansprüche

1. Messsystem,
umfassend eine Ausgleichseinheit (20) für einen Industrieroboter (10), wobei die Ausgleichseinheit (20) ein Messelement (40) zum Abtasten eines Messobjekts umfasst, und wobei das Messsystem eine Auswerteeinheit (60) umfasst, welche ausgelegt ist, eine Auslenkung der Ausgleichseinheit (20) zu verarbeiten, wobei durch ein Auswerten der Auslenkung (a) der Ausgleichseinheit (20) eine Messfunktion zum Vermessen des Messobjekts bereitgestellt wird, und wobei die Auswerteeinheit (60) in einer Steuereinheit des Industrieroboters (10) anordnenbar ist.

2. Messsystem nach Anspruch 1,
wobei die Ausgleichseinheit (20) ausgelegt ist, ein translatorische und/oder eine rotatorische Auslenkung bereitzustellen.

3. Messsystem nach Anspruch 1 oder 2,
wobei das Messelement (40) als Kegel ausgebildet ist.

4. Messsystem nach einem der vorhergehenden Ansprüche,
umfassend ein Schnellwechselsystem zur schnellen Anordnung des Messsystems an einem Industrieroboter (10).

5. Messsystem nach einem der vorhergehenden Ansprüche,
umfassend eine externe Positioniereinheit zum Positionieren eines zu vermessendes Bauteils (80).

6. Fertigungssystem, umfassend einen Industrieroboter (10) sowie ein Messsystem nach einem der vorhergehenden Ansprüche.

7. Fertigungssystem nach Anspruch 6,
umfassend eine Verarbeitungseinheit, welche ausgelegt ist, die von der Ausgleichseinheit (20) erfassten Daten zur Steuerung und/oder Regelung anderer Prozessschritte zu verwenden.

8. Verfahren zum taktilen Messen,
umfassend die Schritte:
- Bereitstellen eines Industrieroboters (10) mit einer Ausgleichseinheit (20), wobei der Industrieroboter (10) ein Messelement (40) aufweist, welches mit der Ausgleichseinheit (20) verbunden ist;
- Abtasten eines Messobjekts (82) mit dem Messelement (40) und Auswerten einer Auslenkung (a) der Ausgleichseinheit (20) zum Vermessen des Objektes mit einer Auswerteeinheit (60), welche in einer Steuereinheit des Industrieroboters (10) angeordnet ist.

9. Verfahren nach Anspruch 8,
umfassend die Schritte:
- Abtasten derart, dass das Messelement (40) oder das Messobjekt (82) in eine Messposition verfahren wird;
- Erfassen und Auswerten des Verfahrwegs und Auswerten der Auslenkung des Messelements (40).

10. Verwendung eines Messsystems nach einem der Ansprüche 1-5 zum taktilen Messen eines Messobjekts.

## Claims

1. Measurement system,
comprising a compensation unit (20) for an industrial robot (10),
wherein the compensation unit (20) comprises a measurement element (40) for probing a measurement object,
and wherein the measurement system comprises an evaluation unit (60), which is designed to process a deflection of the compensation unit (20),
wherein a measurement function for measuring the measurement object is provided by way of evaluating the deflection (a) of the compensation unit (20), and wherein the evaluation unit (60) is arrangeable in a control unit of the industrial robot (10).

2. Measurement system according to Claim 1,
wherein the compensation unit (20) is designed to provide a translational and/or a rotational deflection.

3. Measurement system according to Claim 1 or 2, wherein the measurement element (40) is embodied in the form of a cone.

4. Measurement system according to one of the preceding claims,
comprising a quick-change system for quickly arranging the measurement system at an industrial robot (10).

5. Measurement system according to one of the preceding claims,
comprising an external positioning unit for positioning a component (80) to be measured.

6. Manufacturing system, comprising an industrial robot (10) and a measurement system according to one of the preceding claims.

7. Manufacturing system according to Claim 6, comprising a processing unit, which is designed to use the data that are captured by the compensation unit (20) for the open-loop and/or closed-loop control of other process steps.

8. Method for tactile measurement,
comprising the steps of:
- providing an industrial robot (10) having a compensation unit (20), wherein the industrial robot (10) has a measurement element (40) connected to the compensation unit (20);
- probing a measurement object (82) using the measurement element (40) and evaluating a deflection (a) of the compensation unit (20) for measuring the object using an evaluation unit (60), which is arranged in a control unit of the industrial robot (10).

9. Method according to Claim 8,
comprising the steps of:
- probing such that the measurement element (40) or the measurement object (82) is moved into a measurement position;
- capturing and evaluating the movement path and evaluating the deflection of the measurement element (40).

10. Use of a measurement system according to one of Claims 1-5 for tactile measurement of a measurement object.

## Revendications

1. Système de mesure, comprenant une unité de compensation (20) pour un robot industriel (10),
l'unité de compensation (20) comprenant un élément de mesure (40) pour balayer un objet de mesure, et
le système de mesure comprenant une unité d'évaluation (60) qui est conçue pour traiter une déviation de l'unité de compensation (20), une évaluation de la déviation (a) de l'unité de compensation (20) fournissant une fonction de mesure pour mesurer l'objet de mesure, et
l'unité d'évaluation (60) pouvant être disposée dans une unité de commande du robot industriel (10).

2. Système de mesure selon la revendication 1, dans lequel l'unité de compensation (20) est conçue pour fournir une déviation en translation et/ou en rotation.

3. Système de mesure selon la revendication 1 ou 2, dans lequel l'élément de mesure (40) est réalisé sous forme de cône.

4. Système de mesure selon l'une quelconque des revendications précédentes, comprenant un système de changement rapide pour la disposition rapide du système de mesure sur un robot industriel (10).

5. Système de mesure selon l'une quelconque des revendications précédentes, comprenant une unité de positionnement externe pour positionner une pièce à mesurer (80).

6. Système de fabrication, comprenant un robot industriel (10) ainsi qu'un système de mesure selon l'une quelconque des revendications précédentes.

7. Système de fabrication selon la revendication 6, comprenant une unité de traitement qui est conçue pour utiliser les données détectées par l'unité de compensation (20) pour commander et/ou réguler d'autres étapes de procédé.

8. Procédé de mesure tactile, comprenant les étapes consistant à :
- fournir un robot industriel (10) doté d'une unité de compensation (20), le robot industriel (10) présentant un élément de mesure (40) qui est relié à l'unité de compensation (20) ;
- balayer un objet de mesure (82) doté de l'élément de mesure (40) et évaluer une déviation (a) de l'unité de compensation (20) pour mesurer l'objet avec une unité d'évaluation (60) qui est disposée dans une unité de commande du robot industriel (10).

9. Procédé selon la revendication 8, comprenant les étapes consistant à :
- balayer de telle sorte que l'élément de mesure (40) ou l'objet de mesure (82) est déplacé dans une position de mesure ;
- détecter et évaluer le déplacement et évaluer la déviation de l'élément de mesure (40).

10. Utilisation d'un système de mesure selon l'une quelconque des revendications 1 à 5 pour la mesure tactile d'un objet de mesure.
